Europäisches Patentamt

European Patent Office

Office européen des brevets

(19)

(11) Publication number: **0 035 482**
**B1**

# EUROPEAN PATENT SPECIFICATION

(45) Date of publication of patent specification: **25.07.84**

(21) Application number: **81850032.4**

(22) Date of filing: **27.02.81**

(51) Int. Cl.³: **E 06 B 1/60,** E 06 B 1/02,
E 04 B 1/38

(54) **A method of adjustably fixing a frame or the like in an opening and a locking washer for carrying out the method.**

(30) Priority: **28.02.80 SE 8001548**

(43) Date of publication of application:
**09.09.81 Bulletin 81/36**

(45) Publication of the grant of the patent:
**25.07.84 Bulletin 84/30**

(84) Designated Contracting States:
**BE DE FR GB NL SE**

(56) References cited:
**CH - A - 482 076**
**DD - A - 104 833**
**DE - A - 2 500 214**
**DE - B - 1 962 465**

(73) Proprietor: **The Rawlplug Company Limited**
**Rawlplug House London Road**
**Kingston-upon-Thames, Surrey KT2 6NR United**
**Kingdom (GB)**

(72) Inventor: **Bjurséll, Bertil**
**Djupedalsgatan 18**
**S-557 00 Vårgårda (SE)**

(74) Representative: **Burman, Tore et al,**
**Bergling & Sundbergh AB P.O. Box 7645**
**S-103 94 Stockholm (SE)**

Courier Press, Leamington Spa, England.

## Description

This invention relates to a method of fixing a frame or the like ah an opening, as well as to a locking washer as a means for carrying out the method.

When mounting a window frame or a door frame, for instance, in a wall opening, normally the frame is fixed to studs or wall elements delimiting the opening by means of a number of screws or nails, whereafter the frame is adjusted into its correct position by inserting a number of wedges around the frame between the latter and the wall elements. This procedure is cumbersome and time-consuming.

There has been proposed (cf. SE—A—6817184-2) a method of adjustably fixing a frame or the like in an opening, the method comprising inserting a fixing screw into each of a number of through-holes provided in the frame and being countersunk at the inner side of the frame for the head of the fixing screw, and screwing the fixing screws into wall elements adjacent to the outer side of the frame and delimiting the opening, the fixing screws being locked against axial longitudinal movements in the respective holes while maintaining the ability of rotation of the fixing screws, whereby the position of the frame relative to the wall elements can be adjusted by turning the distinct fixing screws selectively.

In order to enable the locking of the fixing screws, the latter are made in a specific way in that they are provided with a locking sleeve at their heads. The locking sleeve is attached to the head of the fixing screw so as to be axially undisplaceable but rotatable. The locking sleeve is externally threaded so that the sleeve can be threaded into and fixed in the countersink, thereby locking the fixing screw axially in the hole. The external thread of the locking sleeve and the thread of the fixing screw have the same thread pitch. Also, interiorly the locking sleeve is designed so that a first special tool which can be passed through the sleeve into engagement with the head of the fixing screw, prevents the locking sleeve from rotating relative to the rest of the fixing screw, whereby the fixing screw and its associated locking sleeve can be screwed into a wall element adjacent to the frame and the countersunk hole of the frame, resp. In order to provide a subsequent adjusting rotation of the fixing screw, a second special tool is used which can be passed freely through the locking sleeve into engagement with the head of the fixing screw.

Thus, this fixing method requires both expensive special-made fixing screws and expensive special-made mounting tools. Consequently, this fixing method has not been utilized to any extent worth mentioning.

The object of the present invention is to provide on one hand an improved method to be used when mounting a frame, the method making an easy, rapid and efficient and at the same time adjustable fixing of the frame possible while utilizing standard fixing screws and simple mounting tools, and on the other hand a very simple and cheap means for making it possible to carry out the method.

This object is achieved by way of a method and a locking washer which have the features defined in the appended claims.

Thus, the invention essentially means that instead of using fixing screws being of a special design and being provided with particular locking elements, conventional fixing screws are used in combination with a separate locking washer, the locking of the respective fixing screws being accomplished by inserting the fixing screw into its associated hole so that the head of the fixing screw is in contact with the bottom of the countersink of the hole, possibly via a washer or the like, and inserting a locking washer into the countersink, the locking washer having a centre hole permitting the underlying fixing screw to be rotated and having barb or fluke elements spaced around the perimeter and projecting backwards towards the opening of the countersink, the locking washer being inserted so that it is adjacent to the head of the fixing screw, and by causing the barb elements to cooperate with the wall of the countersink so that the locking washer is locked in the countersink. Suitably, the barb elements are brought into cooperation with or engagement with the wall of the countersink by being laterally bent or spread after the insertion of the locking washer, preferably by means of a plunger or the like which is caused to act upon the inner sides of the barb elements. In such a case, the plunger suitably has a diameter corresponding to the diameter of the hole and a conical or tapered end part. The other end part of the plunger can have a reduction diameter so as to fit fully inside of the barb elements and thus can be used for pushing the locking washer into the hole and into contact with the head of the fixing screw.

The locking washer according to the invention essentially comprises a ring element on one side intended to be brought into contact with the head of the fixing screw and having a centre hole enabling a screwdriver or the like to be passed therethrough for rotating the fixing screw, the ring element being provided with barb elements projecting in a direction opposite to said one side, said barb elements being arranged for cooperation with the wall of the countersunk hole so as to lock the washer in the hole. Advantageously, the barb element comprises square-cut plate-shaped projections projecting from the perimeter of the ring element and spaced from each other. It has been found that such a design giving relatively large end faces having sharp edges, means that when mounted the locking washer will be locked against expulsion towards the opening of the hole in a very efficient way even if the frame is made of a relatively soft material such as wood or the like.

The invention will now be described in more detail by way of an exemplifying embodiment while referring to the accompanying drawings, in which:

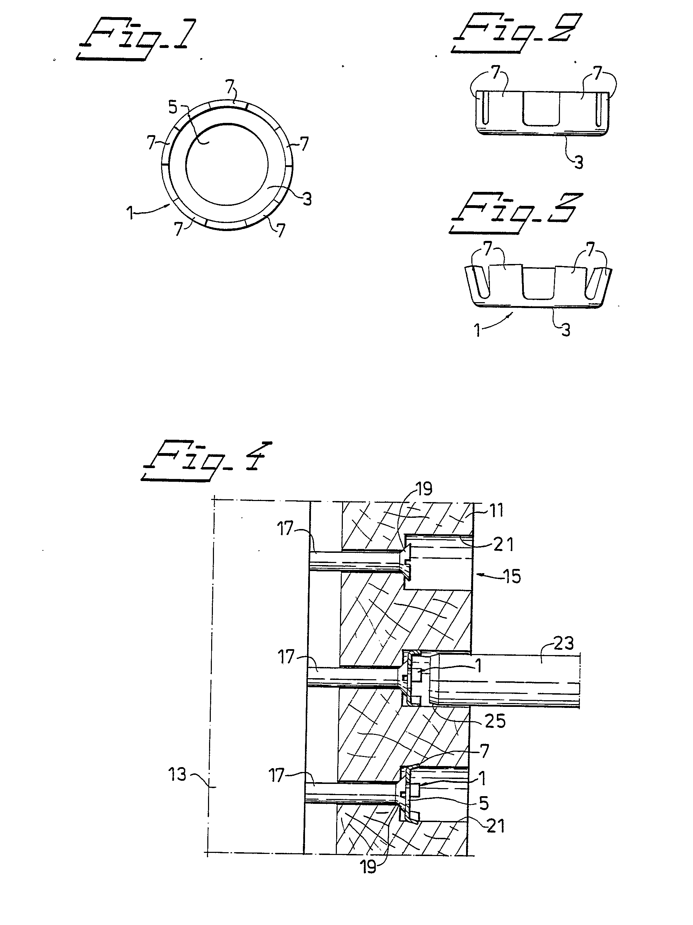

Fig. 1 is a plan view of a locking washer according to the invention; Fig. 2 is a side view of the locking washer of Fig. 1; Fig. 3 is a side view of the locking washer of Figs. 1 and 2 as it appears when mounted; Fig. 4 is a schematic side view, partly in section, of a part of a door frame fixed in a wall.

The locking washer according to the invention, as shown in Figs. 1—3, comprises an essentially flat ring element 3 having a centre hole 5 intended for passing a tool, such as a screwdriver, therethrough. Five barb or fluke elements 7 project from the perimeter or periphery of the circular ring element 3 in one and the same direction and substantially at right angles to the plane of ring element 3. Barb elements 7 are equally spaced around the perimeter of ring element 3 and take the form of lightly curved and squarely terminated plate elements of uniform width and uniform thickness. Thus, barb elements 7 constitute lightly curved rectangular plate elements, the end faces of which lie in a plane essentially parallel to the plane of the ring elements and have sharp edges. The curvature of the barb elements is such that the elements can be considered to constitute parts of a circular-cylindrical sleeve, the diameter of which corresponds to the outer diameter of the ring element, barb elements 7 being separated by axially extending slots.

Locking washer 1 has been produced by causing projections (corresponding to barb elements 7) projecting from the ring element in the plane thereof, to be bent from the plane of the ring element into the position shown in Figs. 1 and 2, the bending being accomplished by pressing. This means that when locking the washer 1 in a hole of a wooden frame (cf. Fig. 4), it will be comparatively easy to bend or spread barb elements 7 into the locking position shown in Fig. 3.

Referring to Fig. 4, reference numeral 11 denotes a wooden door frame; 13 denotes a stud or a wall element of a door opening; 15 denotes throughholes provided in the frame for usual fixing screws 17 having heads 19; 21 denotes hole counterbores at the free inner side of the frame, for the heads 19 of said screws; and 23 denotes a plunger. Locking washers 1 are made in accordance with Figs. 1—3.

In conjunction with the three holes 15 shown, the different steps of using the method and the locking washer of the invention are illustrated schematically. In uppermost hole 15 there is shown a fixing screw 17 having a diameter corresponding to the diameter of the hole, the fixing screw being screwed into stud 13 so that head 19 contacts the bottom of counterbore 21. It is assumed that frame 11 is in an approximate mounting position.

A locking washer 1 has been inserted in middle hole 15, the outer diameter of the washer corresponding to the diameter of the counterbore. The locking washer has been pushed to have its ring element 3 engaging screw head 19, the barb elements 7 of the washer facing the opening of counterbore 21. Furthermore, a plunger 23 has been inserted into the hole, the plunger having a bevelled or tapered front end having a smallest diameter less than the inner diameter between barb elements 7 of the locking washer. Bevelled end 25 corresponds to the height of barb elements 7.

In the lowermost hole 15 there is shown the state after plunger 23 has been hammered into contact with locking washer 1, thereby forcing or spreading the barb elements 7 of locking washer 1 outwards so that the free ends of the barb elements entirely have been pushed into the wall of counterbore 21, thus effectively locking the locking washer against expulsion from hole 15. The position of frame 1 relative to element 13 can now be adjusted easily by inserting a screwdriver into hole 15 and through centre hole 5 of locking washer 1 and into the slot of the head of the screw, the screwdriver then being rotated in a suitable direction.

## Claims

1. A method of adjustably fixing a frame or the like in an opening, the method comprising inserting a fixing screw into each of a number of through-holes provided in the frame and being countersunk at the inner side of the frame for the head of the fixing screw, and screwing the fixing screws into wall elements adjacent to the outer side of the frame and delimiting the opening, the fixing screws being locked against axial longitudinal movements in the respective holes while maintaining the ability of rotation of the fixing screws, whereby the position of the frame relative to the wall elements can be adjusted by turning the distinct fixing screws selectively, characterized in that the locking of the respective fixing screws is accomplished by inserting the fixing screw into the associated hole, so that the head of the fixing screw rests against the bottom of the countersink of said hole, and inerting a locking washer (1) into said counter sink, the locking washer having a centre hole (5) permitting the underlying fixing screw to be rotated and having circumferentially distributed barb elements (7) projecting backwards towards the opening of the countersink at the inner side of the frame, the locking washer being inserted so as to be adjacent to the head of the fixing screw, and by causing the barb elements to cooperate with the wall of the countersink so that the locking washer is locked in the countersink.

2. A method according to claim 1, characterized in that the barb elements (7) are brought into cooperation with the wall of the countersink by being bent laterally outwards after the locking washer has been inserted.

3. A method according to claim 2, characterized by pressing the barb elements (7) of the locking washer laterally by means of a plunger caused to act on the inner sides of the barb elements.

4. A locking washer for locking a fixing screw against longitudinal displacement in a hole of a frame or the like having a countersink for the head of the fixing screw, the screw being intended for adjustably fixing the frame in an opening, characterized in that it comprises a ring element (3) on one side intended to be brought into contact with the head of the fixing screw and having a centre hole (5) enabling a screwdriver to be passed therethrough for rotating the fixing screw, the ring element being provided with barb elements (7) protruding in a direction opposite to said one side, said barb elements being arranged for cooperation with the wall of the countersunk hole so as to lock the washer in the hole.

5. A locking washer according to claim 4, characterized in that the barb elements (7) comprise square-cut plateshaped projections projecting from the perimeter of the ring element (3) and spaced from each other end at right angles to the plane of the ring element.

6. A locking washer according to claim 4 or 5, characterized in that the barb elements (7) are intended to be angularly bent outwards from the ring element (3) to give a locking effect.

7. A locking washer according to any of claims 4—6, characterized in that the barb elements (7) form a cylindric sleeve being longitudinally penetrated or slotted at several places.

8. A locking washer according to any of claims 4—7, characterized in that the barb elements (7) comprise ring element projections bent from the plane of the ring element (3) by pressing.

**Patentansprüche**

1. Verfahren zum ausrichtbaren Befestigen eines Rahmens oder dergl. in einer Öffnung, bei welchem eine Befestigungsschraube in jedes einer Anzahl durchgehender Löcher eingeführt wird, die in dem Rahmen vorgesehen und auf der Innenseite des Rahmens für den Kopf der Befestigungsschraube angesenkt sind, wobei die Befestigungsschrauben in Wandelemente neben der Außenseite des Rahmens eingeschraubt werden und wobei die Wandelemente die Öffnung begrenzen, die Befestigungsschrauben gegen eine axiale Längsbewegung in den entsprechenden Löchern blockiert werden, während die Fähigkeit der Drehung der Befestigungsschrauben aufrechterhalten wird, wodurch die Position des Rahmens bezüglich der Wandelemente durch wahlweises Drehen unterschiedlicher Befestigungsschrauben eingestellt werden kann, dadurch gekennzeichnet, daß das Blockieren der entsprechenden Befestigungsschrauben dadurch erfolgt, daß die Befestigungsschraube in das ententsprechende Loch eingeführt wird, so daß der Kopf der Befestigungsschraube gegen den Boden der Senkung in dem Loch. sitzt, und daß eine Blockierscheibe (1) in die Senkung eingeführt wird, welche ein mittiges Loch (5) hat, welches die Möglichkeit schafft, daß die darunterliegende Befestigungsschraube gedreht wird, und am Umfang verteilte Widerhakenelemente (7) hat, die nach rückwärts zur Öffnung der Senkung an der Innenseite des Rahmens hinragen, und daß die Blockierscheibe eingefügt wird, so daß sie sich neben dem Kopf der Befestigungsschraube befindet, und daß die Widerhakenelemente veranlaßt werden, mit der Wand der Senkung so zusammenzuwirken, daß die Blockierscheibe in der Senkung blockiert wird.

2. Verfahren nach Anspruch 1, dadurch gekennzeichnet, daß die Widerhakenelemente (7) mit der Wand der Senkung dadurch zum Zusammenwirken gebracht werden, daß sie seitlich nach auswärts gebogen werden, nachdem die Blockierscheibe eingeführt worden ist.

3. Verfahren nach Anspruch 2, gekennzeichnet durch Drücken der Widerhakenelemente (7) der Blockierscheibe zur Seite mittels eines Kolbens, der auf die inneren Seiten der Widerhakenelemente wirken gelassen wird.

4. Blockier- bzw. Sicherungsscheibe zum Blockieren oder Sichern einer Befestigungsschraube gegen die Längsverschiebung in einem Loch eines Rahmens oder dergl. mit einer Senkung für den Kopf der Befestigungsschraube, die einstell- bzw. ausrichtbar den Rahmen in einer Öffnung befestigen soll, dadurch gekennzeichnet, daß sie auf einer Seite ein Ringelement (3) aufweist, welches mit dem Kopf der Befestigungsschraube in Berührung gebracht werden soll, und ein Mittelloch (5) hat, welches für einen Schraubenzieher die Möglichkeit zum Hindurchtreten durch das Loch schafft zum Drehen der Befestigungsschraube, daß das Ringelement mit Widerhakenelementen (7) versehen ist, die in einer Richtung entgegengesetzt zu der genannten einen Seite vorstehen, und daß die Widerhakenelements für das Zusammenwirken mit der Wand des Senkloches angeordnet sind, um die Scheibe in dem Loch zu blockieren oder zu sichern.

5. Sicherungsscheibe nach Anspruch 4, dadurch gekennzeichnet, daß die Widerhakenelemente (7) vierkantig geschnittene, plattenförmige Vorsprünge aufweisen, die vom Umfang des Ringelementes (3) und im Abstand voneinander und unter rechten Winkeln zu der Ebene des Ringeelementes hervorstehen.

6. Sicherungsscheibe nach Anspruch 4 oder 5, dadurch gekennzeichnet, daß die Widerhakenelemente dafür vorgesehen sind, von dem Ringelement (3) unter einem Winkel nach auswärts gebogen zu werden, um eine Sicherungswirkung zu geben.

7. Sicherungsscheibe nach einem der Ansprüche 4 bis 6, dadurch gekennzeichnet, daß die Widerhakenelemente (7) eine zylindrische Hülse bilden, die längs durchdrungen bzw. mit Durchdringungen längs versehen sind oder an verschiedenen Stellen geschlitzt sind.

8. Sicherungsscheibe nach einem der Ansprüche 4 bis 7, dadurch gekennzeichnet, daß die Widerhakenelemente (7) Ringelementvorsprünge aufweisen, die aus der Ebene des Ringelementes (3) durch Druck herausgebogen sind.

**Revendications**

1. Procédé pour la fixation ajustable d'un châssis ou analogue dans une ouverture, ledit procédé consistant à insérer une vis de fixation dans chacun d'une pluralité de trous prévus dans le chassis et contre-alésés sur le côté intérieur du châssis pour la tête de la vis de fixation et à visser les vis de fixation dans les éléments de paroi près du coté extérieur du chassis et délimitant l'ouverture, les vis de fixation étant bloquées vis-à-vis de mouvements longitudinaux axiaux dans les trous respectifs tout en maintenant l'aptitude de rotation des vis de fixation si bien que la position du châssis par rapport aux éléments de paroi peut être ajustée en faisant tourner sélectivement les vis de fixation distinctes, caractérisé en ce qu'on réalise le blocage des vis de fixation respectives en insérant la vis de fixation dans le trou associé afin que la tête de la vis de fixation repose contre le fond du contre-alésage du trou et en insérant une rondelle de blocage (1) dans ledit contre-alésage, la rondelle de blocage présentant un trou central (5) permettant à la vis de fixation sous-jacente d'être tournée et comportant des élément de rétention (7) réparties à la périphérie se prolongeant vers l'arrière en direction de l'ouverture du contre-alésage sur le côté intérieur du châssis, la rondelle de blocage étant insérée afin d'être voisine de la tête de la vis de fixation et en provoquant la coopération des élément de rétention avec la paroi du contre-alèsage de façon que la rondelle de blocage soit bloquée dans le contre-alésage.

2. Procédé selon la revendication 1, caractérisé en ce que les élément de rétention (7) sont amenées à coopérer avec la paroi du contre-alésage en étant cintrées latéralement vers l extérieur après l'insertion de la rondelle de blocage.

3. Procédé selon là revendication 2, caractérisé en ce qu'on presse latéralement les élément de rétention (7) de la rondelle de blocage au moyen d'un plongeur agissant sur les côtés internes de élément de rétention.

4. Rondelle de blocage pour bloquer une vis de fixation vis-à-vis d'un déplacement longitudinal dans un trou d'un châssis ou analogue ayant un contre-alésage pour la tête de la vis de fixation, la vis étant destinée à la fixation adjustable du châssis dans une ouverture, caractérisée en ce qu'elle comprend un anneau (3) sur un côté destiné à venir au contact de la tête de la vis de fixation et ayant un trou central (5) pour le passage d'un tournevis afin de faire tourner la vis de fixation, l'anneau étant muni d'élément de rétention (7) faisant saillie dans une direction opposée audit côté, lesdites élément de rétention étant agencées pour coopérer avec la paroi du trou contre-alésé afin de bloquer la rondelle dans le trou.

5. Rondelle de blocage selon la revendication 4, caractérisée en ce que les élément de rétention (7) comportent des prolongements en forme de plaque découpée en carré faisant saillie du pourtour de l'anneau (3) et espacés l'un par rapport à l'autre et perpendiculairement au plan de l'anneau.

6. Rondelle de blocage selon 'lune des revendications 4 ou 5, caractérisée en ce que les élément de rétention (7) sont destinées, à être cintrées vers l'extérieur suivant un angle à partir de l'anneau (3) pour obtenir un effet de blocage.

7. Rondelle de blocage selon l'une quelconque des revendications 4 à 6, caractérisée en ce que les élément de rétention (7) forment un manchon cylindrique fendu longitudinalement en divers endroits.

8. Rondelle de blocage selon l'une quelconque des revendications 4 à 7, caractérisée en ce que les élément de rétention (7) comportent des prolongements d'anneau cintrés à partir du plan de l'anneau (3) par pressage.

Fig.1

Fig.2

Fig.3

Fig.4